# EUROPÄISCHE PATENTSCHRIFT

(11) **EP 2 399 764 B1**
(45) Veröffentlichungstag und Bekanntmachung des Hinweises auf die Patenterteilung: **17.02.2016**
(21) Anmeldenummer: 11170765.9
(22) Anmeldetag: 21.06.2011
(51) Int. Cl.: B60D 1/02, B60D 1/46

(54) **Kupplungsvorrichtung für ein landwirtschaftliches Zugfahrzeug**
Coupling device for an agricultural towing vehicle
Dispositif d'accouplement pour tracteur agricole

(30) Priorität: 25.06.2010 DE 102010030556
(43) Veröffentlichungstag der Anmeldung: 28.12.2011
(73) Patentinhaber: DEERE & COMPANY, Moline, Illinois 61265-8098 (US)
(72) Erfinder: Heitlinger, Martin, 76684 Östringen (DE); Onken, Hanko, 68167 Mannheim (DE)
(74) Vertreter: Dehnhardt, Florian Christopher

(56) Entgegenhaltungen:
- EP-A2- 1 559 593
- DE-A1- 10 304 978
- DE-U1- 20 015 101

## Beschreibung

Die Erfindung betrifft eine Kupplungsvorrichtung für ein landwirtschaftliches Zugfahrzeug, insbesondere einen landwirtschaftlichen Traktor, mit zwei gegenüberliegend angeordneten Kupplungswangen, die jeweils eine sich längs erstreckende Führungsnut aufweisen, in die ein mit einer Anhängekupplung verbundener Kupplungsträger eingeführt ist.

Eine gattungsgemäße Kupplungsvorrichtung für ein als Traktor ausgebildetes landwirtschaftliches Zugfahrzeug geht beispielsweise aus der DE 10 2009 001 252 A1 hervor. Die Kupplungsvorrichtung umfasst zwei gegenüberliegende, in vertikaler Richtung verlaufende Führungen, zwischen denen ein mit einer Anhängekupplung verbundener Kupplungsträger höhenverstellbar angeordnet ist.

Eine weitere gattungsgemäße Kupplungsvorrichtung ist aus der EP 1 559 593 A2 bekannt.

Im Allgemeinen ist eine derartige Anhängekupplung bezüglich der Abmessungen der Trägerplatte herstellerseitig genormt, sodass sich diese in landwirtschaftlichen Zugfahrzeugen unterschiedlicher Leistungsklassen des jeweiligen Herstellers verwenden lässt. Die Auslegung der Anhängekupplung orientiert sich hierbei an der höchsten der in Frage kommenden Leistungsklassen. Insofern ist die Anhängekupplung bezüglich ihrer Belastbarkeit im Falle einer Verwendung in landwirtschaftlichen Zugfahrzeugen geringerer Leistungsklassen mehr oder minder überdimensioniert.

Aus Kosten- und/oder Gewichtsgründen besteht daher der Wunsch, eine Anhängekupplung anbieten zu können, deren Dimensionierung eigens an eine Verwendung in landwirtschaftlichen Zugfahrzeugen vergleichsweise geringer Leistungsklassen angepasst ist, jedoch eine unerwünschte Verwendung in landwirtschaftlichen Zugfahrzeugen höherer Leistungsklassen zuverlässig ausschließt.

Diese Aufgabe wird durch eine Kupplungsvorrichtung für ein landwirtschaftliches Zugfahrzeug mit den Merkmalen des Patentanspruchs 1 gelöst.

Die erfindungsgemäße Kupplungsvorrichtung für ein landwirtschaftliches Zugfahrzeug, insbesondere einen landwirtschaftlichen Traktor, umfasst zwei gegenüberliegend angeordnete Kupplungswangen, die jeweils eine sich längs erstreckende Führungsnut aufweisen, in die ein mit einer Anhängekupplung verbundener Kupplungsträger eingeführt ist. Zumindest eine der Kupplungswangen weist eine Codierkontur auf, in die ein an dem Kupplungsträger ausgebildetes Codierelement beim Einführen der Anhängekupplung eingreift.

Auf diese Weise kann durch geeignete Ausbildung des Codierelements ein Einführen der Anhängekupplung in eine an einem landwirtschaftlichen Zugfahrzeug angeordnete Kupplungsvorrichtung ausgeschlossen werden, sofern diese nicht über die hierfür erforderliche komplementäre Codierkontur verfügt. Insofern bilden Codierelement und Codierkontur ein auf dem Prinzip von Schlüssel und Schloss ineinandergreifendes Codiersystem, das es erlaubt, die Verwendung bestimmter Anhängekupplungen herstellerseitig auf landwirtschaftliche Zugfahrzeuge vergleichsweise geringer Leistungsklassen zu beschränken.

Vorteilhafte Weiterbildungen der erfindungsgemäßen Kupplungsvorrichtung gehen aus den Unteransprüchen hervor.

Vorzugsweise ist die Codierkontur durch eine in Einführrichtung der Anhängekupplung verlaufende Ausnehmung gebildet. Die Ausnehmung weist insbesondere einen in Bezug auf die Form des Codierelements komplementären Querschnittsverlauf auf. Hierbei ist es denkbar, lediglich an einer der Kupplungswangen oder aber an beiden Kupplungswangen eine derartige Ausnehmung vorzusehen.

Die Ausnehmung kann in Gestalt eines Führungsschlitzes ausgebildet sein. Der Führungsschlitz ist beispielsweise als mittig verlaufende Ausfräsung entlang einer Innenflanke der Führungsnut der zumindest einen Kupplungswange eingebracht.

Alternativ kann die Ausnehmung auch in Gestalt einer Einbuchtung ausgebildet sein. Der Querschnittsverlauf der Einbuchtung ist vorzugsweise derart gewählt, dass ein Ansammeln unerwünschter Verschmutzungen, wie sie beim Arbeitseinsatz von landwirtschaftlichen Zugfahrzeugen unvermeidbar sind, erschwert und eine Selbstreinigung beim Einführen der Anhängekupplung in die Kupplungsvorrichtung unterstützt wird. Hierzu weist die Einbuchtung einen gerundeten, insbesondere kurvenförmigen Querschnittsverlauf auf.

Des Weiteren besteht die Möglichkeit, dass die Codierkontur an einem in Einführrichtung der Anhängekupplung verlaufenden Außenbereich, beispielsweise an einer Außenflanke der zumindest einen Kupplungswange ausgebildet ist. Aufgrund der außenliegenden Anordnung der Codierkontur lässt sich diese mit vergleichsweise geringem fertigungstechnischen Aufwand, beispielsweise durch Planfräsen der Außenflanke, herstellen.

Die Kupplungswangen können in vertikaler oder horizontaler Richtung verlaufen. Dementsprechend ist der mit der Anhängekupplung verbundene Kupplungsträger vertikal oder horizontal in die von den Kupplungswangen umfassten Führungsnute eingeführt. Welche der vorstehenden Möglichkeiten gewählt wird, hängt letztlich vom Einsatzgebiet der Kupplungsvorrichtung und nicht zuletzt von den dabei auftretenden Stützlasten ab.

Darüber hinaus kann der Kupplungsträger innerhalb der Führungsnute entlang eines vorgegebenen Verstellbereichs in verschiedene Betriebsstellungen verbringbar sein. Im Falle vertikal verlaufender Kupplungswangen erlaubt dies eine Anpassung des Abstands der Anhängekupplung gegenüber der Bodenaufstandsfläche des landwirtschaftlichen Zugfahrzeugs, mithin also eine Höhenverstellung der Anhängekupplung. Die Anhängekupplung kann zu diesem Zweck einen Verriegelungsmechanismus mit einem von Hand zu bedienenden Hebel aufweisen, der der Betätigung seitwärts am Kupplungsträger abragender Verriegelungsbolzen dient, die sich mit entlang der Führungsnute ausgebildeten Verriegelungsöffnungen entsprechend der verschiedenen Betriebsstellungen des Kupplungsträgers in Eingriff bringen lassen.

Vorzugsweise ist das Codierelement unter Berücksichtigung eines zwischen dem Kupplungsträger und den Führungsnuten vorhandenen Spiels derart bemessen, dass ein unerwünschter Kontakt mit der Codierkontur in eingeführtem Zustand ausgeschlossen ist. Dies lässt sich durch einen gegenüber dem Spiel vergrößerten Abstand zwischen Codierelement und Codierkontur erreichen. Insofern wird bei quer zur Einführrichtung des Kupplungsträgers auftretenden Lasten eine mögliche Beschädigung der Codierkontur von Seiten des Codierelements wie auch die des Codierelements selbst zuverlässig vermieden.

Bei dem Codierelement handelt es sich vorzugsweise um einen an dem Kupplungsträger der Anhängekupplung seitwärts abragenden Vorsprung. Dieser greift beim Einführen der Anhängekupplung in die an der zumindest einen Kupplungswange vorgesehene Codierkontur ein. Hierbei ist es möglich, lediglich an einer Seite des Kupplungsträgers oder aber an beiden Seiten ein derartiges Codierelement vorzusehen.

Der Vorsprung kann insbesondere in Gestalt eines feststehenden Bolzens ausgebildet sein. Der Bolzen weist vorzugsweise eine einfach herzustellende zylindrische Form auf. Hierbei ist es möglich, dass der Bolzen in ein in den Kupplungsträger eingebrachtes Sackloch eingepasst bzw. eingepresst ist. Das Sackloch ist beispielsweise mittig in einem oberen Seitenbereich einer Kupplungsbacke des Kupplungsträgers angeordnet. Zur Vermeidung eines frühzeitigen Verschleißes ist es denkbar, den Bolzen aus gehärtetem und/oder oberflächenvergütetem Stahl herzustellen.

Alternativ kann der Vorsprung auch in Gestalt einer Ausbuchtung ausgebildet sein. Diese kann sich seitlich entlang einer an dem Kupplungsträger vorgesehenen Seitenbacke erstrecken. Die Ausbuchtung ist vorzugsweise einstückiger Bestandteil des als Guss- und/oder Schmiedeteil hergestellten Kupplungsträgers.

Des Weiteren ist es möglich, den Vorsprung in Gestalt eines die zumindest eine Kupplungswange im Bereich einer Außenflanke umgreifenden Schenkels auszubilden. Der vorzugsweise L-förmig ausgebildete und aus gehärtetem und/oder oberflächenvergütetem Stahl hergestellte Schenkel ist beispielsweise an einer Außenseite des Kupplungsträgers angeschweißt.

Die erfindungsgemäße Kupplungsvorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein erstes Ausführungsbeispiel der erfindungsgemäßen Kupplungsvorrichtung für ein landwirtschaftliches Zugfahrzeug,
- Fig. 2: eine Detailansicht der in Fig. 1 wiedergegebenen Kupplungsvorrichtung,
- Fig. 3: ein zweites Ausführungsbeispiel der erfindungsgemäßen Kupplungsvorrichtung für ein landwirtschaftliches Zugfahrzeug,
- Fig. 4: eine Detailansicht der in Fig. 3 dargestellten Kupplungsvorrichtung,
- Fig. 5: ein drittes Ausführungsbeispiel der erfindungsgemäßen Kupplungsvorrichtung für ein landwirtschaftliches Nutzfahrzeug, und
- Fig. 6: eine Detailansicht der in Fig. 5 dargestellten Kupplungsvorrichtung.

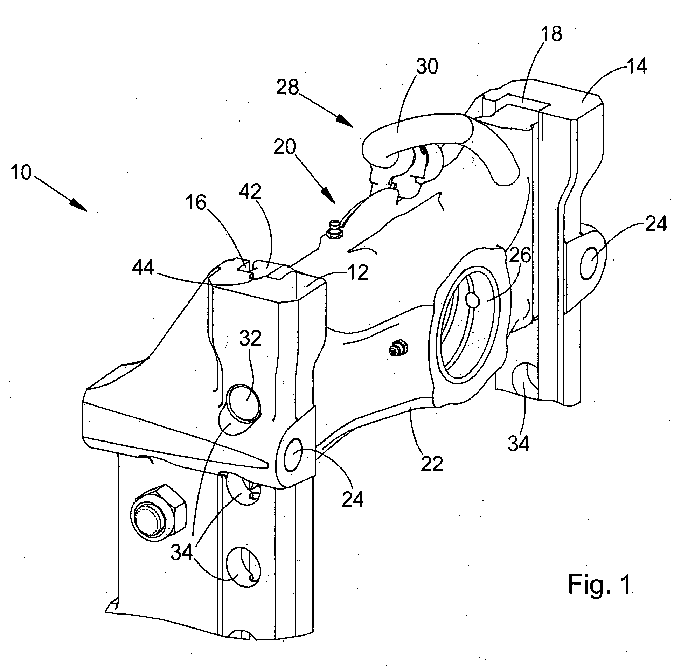

Fig. 1 zeigt ein erstes Ausführungsbeispiel der erfindungsgemäßen Kupplungsvorrichtung für ein nicht dargestelltes landwirtschaftliches Zugfahrzeug, insbesondere einen landwirtschaftlichen Traktor.

Die Kupplungsvorrichtung 10 umfasst zwei gegenüberliegend angeordnete, in vertikaler Richtung verlaufende Kupplungswangen 12, 14. Genauer gesagt ist eine linke Kupplungswange 12 sowie eine parallel zu dieser verlaufende rechte Kupplungswange 14 vorgesehen. Die Kupplungswangen 12, 14 weisen jeweils eine sich längs erstreckende Führungsnut 16, 18 auf, in die ein mit einer Anhängekupplung 20 verbundener Kupplungsträger 22 eingeführt ist. Eine Vielzahl von quer zur Einführrichtung des Kupplungsträgers 22 angeordneten Befestigungsaugen 24 dient der Aufnahme zugehöriger Befestigungsbolzen, die es ermöglichen, die Kupplungswangen 12, 14 und damit die Kupplungsvorrichtung 10 in einem Heckbereich, insbesondere an einem Differentialgehäuse des landwirtschaftlichen Zugfahrzeugs anzubringen. Die Kupplungsaugen 24 sind einstückiger Bestandteil der jeweils als Guss- bzw. Schmiedeteil hergestellten Kupplungswangen 12, 14.

Eine in einem zentralen Bereich des Kupplungsträgers 22 vorgesehene Aufnahmeöffnung 26 ist zur Befestigung eines nicht dargestellten Kupplungselements vorgesehen. Bei dem Kupplungselement handelt es sich beispielsweise um ein Kupplungsmaul, eine Kupplungskugel, einen Zugzapfen (Pitonfix), oder einen Zughaken.

Der Kupplungsträger 22 ist innerhalb der Führungsnute 16, 18 entlang eines vorgegebenen Verstellbereichs in verschiedene Betriebsstellungen verbringbar. Dies erlaubt eine Anpassung des Abstands der Anhängekupplung 20 gegenüber der Bodenaufstandsfläche des landwirtschaftlichen Zugfahrzeugs, mithin also eine Höhenverstellung der Anhängekupplung 20. Die Anhängekupplung 20 weist zu diesem Zweck einen Verriegelungsmechanismus 28 mit einem von Hand zu bedienenden Hebel 30 auf, der der Betätigung seitwärts am Kupplungsträger 22 abragender Verriegelungsbolzen 32 dient, die sich mit entlang der Führungsnute 16, 18 ausgebildeten Verriegelungsöffnungen 34 entsprechend der verschiedenen Betriebsstellungen des Kupplungsträgers 22 in Eingriff bringen lassen.

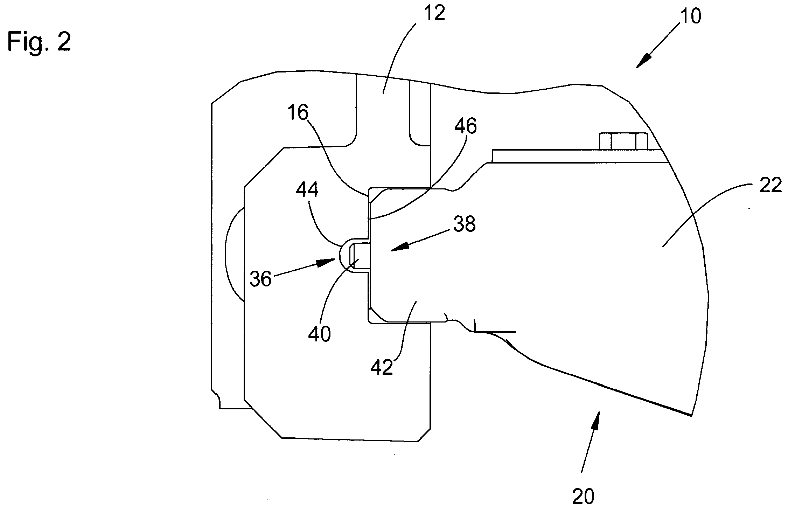

Fig. 2 zeigt eine Detailansicht der in Fig. 1 dargestellten Kupplungsvorrichtung 10, wobei diese von oben in Einführrichtung des Kupplungsträgers 22 dargestellt ist. Demgemäß weist die linke Kupplungswange 12 eine Codierkontur 36 auf, in die ein an dem Kupplungsträger 22 ausgebildetes Codierelement 38 beim Einführen der Anhängekupplung 20 eingreift.

Bei dem Codierelement 38 handelt es sich um einen an dem Kupplungsträger 22 der Anhängekupplung 20 seitwärts abragenden Vorsprung, der in Gestalt eines feststehenden, zylindrisch geformten Bolzens 40 ausgebildet ist. Der Bolzen 40 ist in ein in den Kupplungsträger 22 eingebrachtes Sackloch eingepasst bzw. eingepresst. Das Sackloch ist mittig in einem oberen Seitenbereich einer Kupplungsbacke 42 des Kupplungsträgers 22 angeordnet. Zur Vermeidung eines frühzeitigen Verschleißes ist der Bolzen 40 aus gehärtetem und/oder oberflächenvergütetem Stahl hergestellt. Im vorliegenden Fall ist lediglich ein einzelner Bolzen 40 dargestellt. Es ist jedoch auch denkbar, in gleicher Weise eine Vielzahl derartiger Bolzen 40 entlang der Kupplungsbacke 42 anzubringen.

Die Codierkontur 36 ist durch eine in Einführrichtung der Anhängekupplung 20 verlaufende Ausnehmung gebildet. Die Ausnehmung weist einen in Bezug auf die Form des Codierelements 38 komplementären Querschnittsverlauf auf. Die Ausnehmung ist beispielsgemäß in Gestalt eines Führungsschlitzes 44 ausgebildet. Der Führungsschlitz 44 ist als mittig verlaufende Ausfräsung entlang einer Innenflanke 46 der Führungsnut 16 der linken Kupplungswange 12 eingebracht.

Mit anderen Worten schließt das Codierelement 38 ein Einführen der Anhängekupplung 20 in eine an einem landwirtschaftlichen Zugfahrzeug angeordnete Kupplungsvorrichtung 10 aus, sofern diese nicht über die hierfür erforderliche komplementäre Codierkontur 36 verfügt. Insofern bilden Codierelement 38 und Codierkontur 36 ein auf dem Prinzip von Schlüssel und Schloss ineinandergreifendes Codiersystem, das es erlaubt, die Verwendung bestimmter Anhängekupplungen herstellerseitig auf landwirtschaftliche Zugfahrzeuge vergleichsweise geringer Leistungsklassen zu beschränken.

Das Codierelement 38 ist unter Berücksichtigung eines zwischen dem Kupplungsträger 22 und den Führungsnuten 16, 18 vorhandenen Spiels derart bemessen, dass ein unerwünschter Kontakt mit der Codierkontur 36 in eingeführtem Zustand ausgeschlossen ist. Dies wird durch einen gegenüber dem Spiel vergrößerten Abstand zwischen Codierelement 38 und Codierkontur 36 erreicht. Insofern wird bei quer zur Einführrichtung des Kupplungsträgers 22 auftretenden Lasten eine mögliche Beschädigung der Codierkontur 36 von Seiten des Codierelements 38 wie auch die des Codierelements 38 selbst zuverlässig vermieden.

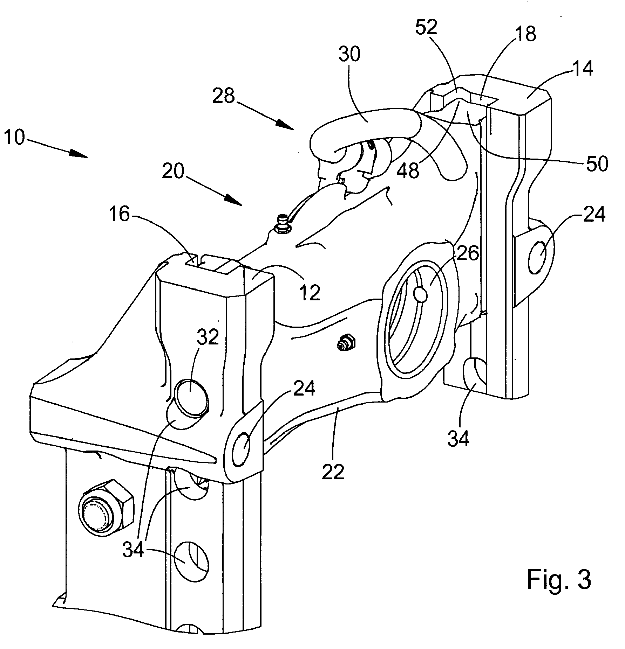

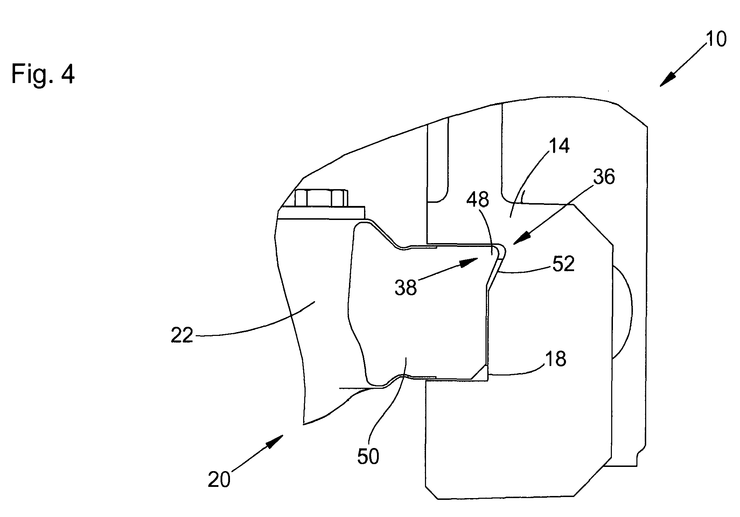

Fig. 3 zeigt ein zweites Ausführungsbeispiel der erfindungsgemäßen Kupplungsvorrichtung für ein nicht dargestelltes landwirtschaftliches Zugfahrzeug, insbesondere einen landwirtschaftlichen Traktor. Das zweite Ausführungsbeispiel zeichnet sich durch eine gegenüber dem ersten Ausführungsbeispiel abgewandelte konstruktive Ausgestaltung von Codierelement 38 und Codierkontur 36 aus. Fig. 4 zeigt in diesem Zusammenhang eine Detailansicht der in Fig. 3 wiedergegebenen Kupplungsvorrichtung 10, wobei diese von oben in Einführrichtung des Kupplungsträgers 22 dargestellt ist.

Bei dem Codierelement 38 handelt es sich um einen an dem Kupplungsträger 22 der Anhängekupplung 20 seitwärts abragenden Vorsprung, der in Gestalt einer nasenförmigen Ausbuchtung 48 ausgebildet ist. Diese erstreckt sich seitlich entlang einer an dem Kupplungsträger 22 vorgesehenen Kupplungsbacke 50. Die Ausbuchtung 48 ist einstückiger Bestandteil des als Guss- und/oder Schmiedeteil hergestellten Kupplungsträgers 22.

Die Codierkontur 36 ist durch eine in Einführrichtung der Anhängekupplung 20 verlaufende Ausnehmung gebildet. Diese weist einen in Bezug auf die Form des Codierelements 38 komplementären Querschnittsverlauf auf. Die Ausnehmung ist beispielsgemäß in Gestalt einer der rechten Kupplungswange 14 zugeordneten Einbuchtung 52 ausgebildet. Der Querschnittsverlauf der Einbuchtung 52 ist derart gewählt, dass ein Ansammeln unerwünschter Verschmutzungen, wie sie beim Arbeitseinsatz von landwirtschaftlichen Zugfahrzeugen unvermeidbar sind, erschwert und eine Selbstreinigung beim Einführen der Anhängekupplung 20 in die Kupplungsvorrichtung 10 unterstützt wird. Hierzu weist der Querschnitt der Einbuchtung 52 einen gerundeten, insbesondere kurvenförmigen Verlauf auf.

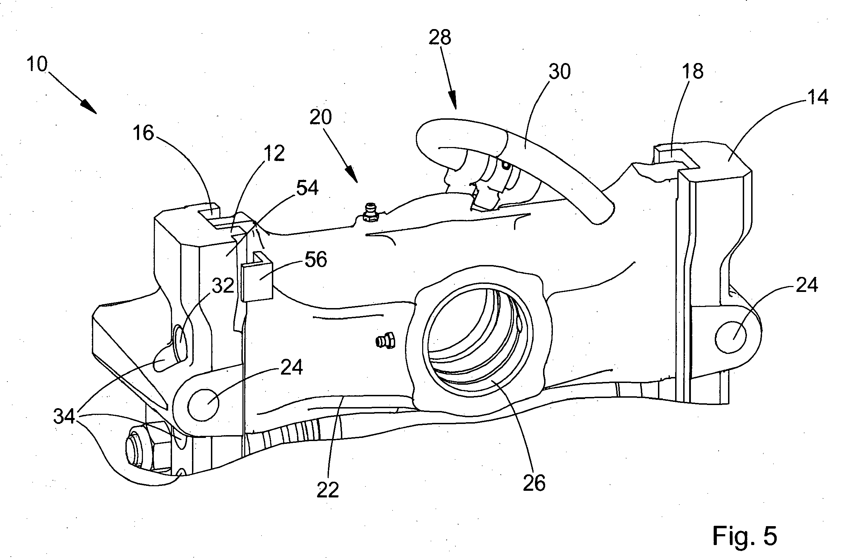

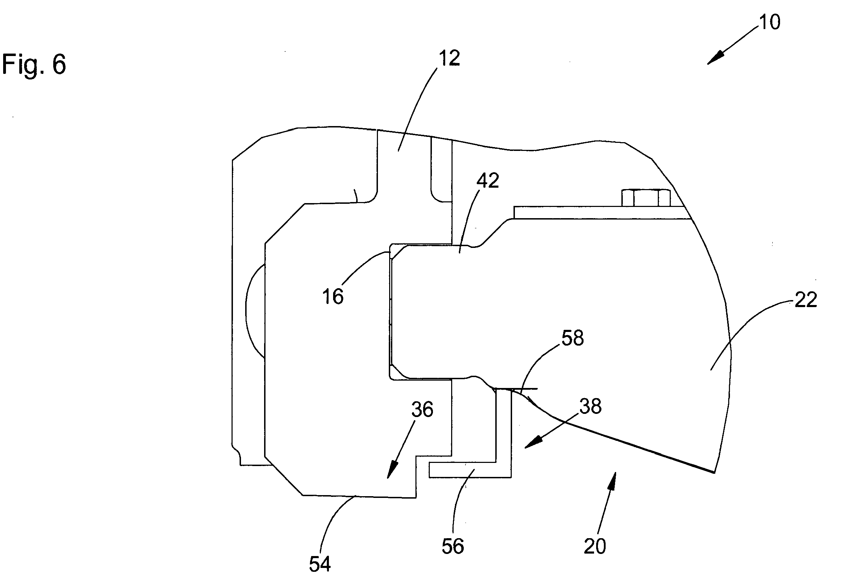

Fig. 5 zeigt ein drittes Ausführungsbeispiel der erfindungsgemäßen Kupplungsvorrichtung für ein nicht dargestelltes landwirtschaftliches Zugfahrzeug, insbesondere einen landwirtschaftlichen Traktor. Das dritte Ausführungsbeispiel zeichnet sich durch eine gegenüber dem ersten bzw. zweiten Ausführungsbeispiel weitergehend abgewandelte konstruktive Ausgestaltung von Codierelement 38 und Codierkontur 36 aus. Fig. 6 zeigt in diesem Zusammenhang eine Detailansicht der in Fig. 5 wiedergegebenen Kupplungsvorrichtung 10, wobei diese von oben in Einführrichtung des Kupplungsträgers 22 dargestellt ist.

Bei dem Codierelement 38 handelt es sich um einen an dem Kupplungsträger 22 der Anhängekupplung 20 seitwärts abragenden Vorsprung, der in Gestalt eines die linke Kupplungswange 12 im Bereich einer Außenflanke 54 umgreifenden Schenkels 56 ausgebildet ist. Der L-förmig ausgebildete und aus gehärtetem und/oder oberflächenvergütetem Stahl hergestellte Schenkel 56 ist an einer Außenseite 58 des Kupplungsträgers 22 angeschweißt.

Die Codierkontur 36 ist an einem in Einführrichtung der Anhängekupplung 20 verlaufenden Außenbereich, genauer gesagt an der Außenflanke 54 der linken Kupplungswange 12 ausgebildet. Aufgrund der außenliegenden Anordnung der Codierkontur 36 lässt sich diese mit vergleichsweise geringem fertigungstechnischen Aufwand, beispielsweise durch Planfräsen der Außenflanke 54, herstellen.

## Patentansprüche

1. Kupplungsvorrichtung für ein landwirtschaftliches Zugfahrzeug, insbesondere einen landwirtschaftlichen Traktor, mit zwei gegenüberliegend angeordneten Kupplungswangen (12, 14), die jeweils eine sich längs erstreckende Führungsnut (16, 18) aufweisen, in die ein mit einer Anhängekupplung (20) verbundener Kupplungsträger (22) eingeführt ist, **dadurch gekennzeichnet, dass** zumindest eine der Kupplungswangen (12, 14) eine Codierkontur (36) aufweist, in die ein an dem Kupplungsträger (22) ausgebildetes Codierelement (38) beim Einführen der Anhängekupplung (20) eingreift.

2. Kupplungsvorrichtung nach Anspruch 1, **dadurch gekennzeichnet, dass** die Codierkontur (36) durch eine in Einführrichtung der Anhängekupplung (20) verlaufende Ausnehmung (44, 52) gebildet ist.

3. Kupplungsvorrichtung nach Anspruch 2, **dadurch gekennzeichnet, dass** die Ausnehmung in Gestalt eines Führungsschlitzes (44) oder einer Einbuchtung (52) ausgebildet ist.

4. Kupplungsvorrichtung nach der Anspruch 1, **dadurch gekennzeichnet, dass** die Codierkontur (36) an einem in Einführrichtung der Anhängekupplung (20) verlaufenden Außenbereich der zumindest einen Kupplungswange (12) ausgebildet ist.

5. Kupplungsvorrichtung nach einem der Ansprüche 1 bis 4,
**dadurch gekennzeichnet, dass** die Kupplungswangen (12, 14) in vertikaler oder horizontaler Richtung verlaufen.

6. Kupplungsvorrichtung nach einem der Ansprüche 1 bis 5, **dadurch gekennzeichnet, dass** der Kupplungsträger (22) innerhalb der Führungsnuten (16, 18) entlang eines vorgegebenen Verstellbereichs in verschiedene Betriebsstellungen verbringbar ist.

7. Kupplungsvorrichtung nach einem der Ansprüche 1 bis 6, **dadurch gekennzeichnet, dass** das Codierelement (38) unter Berücksichtigung eines zwischen dem Kupplungsträger (22) und den Führungsnuten (16, 18) vorhandenen Spiels derart bemessen ist, dass ein Kontakt mit der Codierkontur (36) in eingeführtem Zustand ausgeschlossen ist.

8. Kupplungsvorrichtung nach einem der Ansprüche 1 bis 7, **dadurch gekennzeichnet, dass** es sich bei dem Codierelement (38) um einen an dem Kupplungsträger (22) seitwärts abragenden Vorsprung (40, 48, 56) handelt.

9. Kupplungsvorrichtung nach Anspruch 8, **dadurch gekennzeichnet, dass** der Vorsprung in Gestalt eines feststehenden Bolzens (40), einer Ausbuchtung (48), oder eines die zumindest eine Kupplungswange (12) im Bereich einer Außenflanke (54) umgreifenden Schenkels (56) ausgebildet ist.

10. Kupplungsvorrichtung nach Anspruch 9, **dadurch gekennzeichnet, dass** der Bolzen (40) in ein in dem Kupplungsträger (22) ausgebildetes Sackloch eingepasst ist.

11. Kupplungsvorrichtung nach Anspruch 9 oder 10, **dadurch gekennzeichnet, dass** der Bolzen (40) aus gehärtetem und/oder oberflächenvergütetem Stahl hergestellt ist.

12. Kupplungsvorrichtung nach Anspruch 9, **dadurch gekennzeichnet, dass** die Ausbuchtung (48) einstückiger Bestandteil des Kupplungsträgers (22) ist.

13. Kupplungsvorrichtung nach Anspruch 9, **dadurch gekennzeichnet, dass** der Schenkel (56) an einer Außenseite (58) des Kupplungsträgers (22) angeschweißt ist.

14. Landwirtschaftliches Zugfahrzeug, insbesondere landwirtschaftlicher Traktor, mit einer Kupplungsvorrichtung (10) nach einem der Ansprüche 1 bis 7.

## Claims

1. Coupling device for an agricultural towing vehicle, in particular an agricultural tractor, with two oppositely arranged coupling cheeks (12, 14), which have a respective longitudinally extending guide groove (16, 18), into which a coupling support (22) which is connected to a trailer coupling (20) is inserted, **characterized in that** at least one of the coupling cheeks (12, 14) has a coding contour (36) in which a coding element (38) formed on the coupling support (22) engages when the trailer coupling (20) is inserted.

2. Coupling device according to Claim 1, **characterized in that** the coding contour (36) is formed by a recess (44, 52) running in the insertion direction of the trailer coupling (20).

3. Coupling device according to Claim 2, **characterized in that** the recess is designed in the form of a guide slot (44) or an indentation (52).

4. Coupling device according to Claim 1, **characterized in that** the coding contour (36) is formed on an outer region of the at least one coupling cheek (12), the outer region running in the insertion direction of the trailer coupling (20).

5. Coupling device according to one of Claims 1 to 4, **characterized in that** the coupling cheeks (12, 14) run in the vertical or horizontal direction.

6. Coupling device according to one of Claims 1 to 5, **characterized in that** the coupling support (22) can be brought along a predetermined adjustment region within the guide groves (16, 18) into various operating positions.

7. Coupling device according to one of Claims 1 to 6, **characterized in that** the coding element (38) is dimensioned, with a play present between the coupling support (22) and the guide grooves (16, 18) being taken into consideration, in such a manner that contact with the coding contour (36) is prevented in the inserted state.

8. Coupling device according to one of Claims 1 to 7, **characterized in that** the coding element (38) is a projection (40, 48, 56) protruding sideways on the coupling support (22).

9. Coupling device according to Claim 8, **characterized in that** the projection is designed in the form of a fixed pin (40), a protrusion (48) or a limb (56) engaging around the at least one coupling cheek (12) in the region of an outer flank (54).

10. Coupling device according to Claim 9, **characterized in that** the pin (40) is fitted into a blind hole formed in the coupling support (22).

11. Coupling device according to Claim 9 or 10, **characterized in that** the pin (40) is produced from hardened and/or surface treated steel.

12. Coupling device according to Claim 9, **characterized in that** the protrusion (48) is an integral part of the coupling support (22).

13. Coupling device according to Claim 9, **characterized in that** the limb (56) is welded to an outer side (58) of the coupling support (22).

14. Agricultural towing vehicle, in particular agricultural tractor, with a coupling device (10) according to one of Claims 1 to 7.

## Revendications

1. Dispositif d'accouplement pour un véhicule tracteur agricole, en particulier un tracteur agricole, comprenant deux joues d'accouplement (12, 14) disposées en regard l'une de l'autre, qui présentent chacune une rainure de guidage s'étendant longitudinalement (16, 18), dans laquelle est introduit un support d'accouplement (22) connecté à un accouplement de remorque (20), **caractérisé en ce qu'**au moins l'une des joues d'accouplement (12, 14) présente un contour de codage (36) dans lequel s'engage un élément de codage (38) réalisé au niveau du support d'accouplement (22) lors de l'introduction de l'accouplement de remorque (20).

2. Dispositif d'accouplement selon la revendication 1, **caractérisé en ce que** le contour de codage (36) est formé par un évidement (44, 52) s'étendant dans la direction d'introduction de l'accouplement de remorque (20).

3. Dispositif d'accouplement selon la revendication 2, **caractérisé en ce que** l'évidement est réalisé sous la forme d'une fente de guidage (44) ou d'un renfoncement (52).

4. Dispositif d'accouplement selon la revendication 1, **caractérisé en ce que** le contour de codage (36) est réalisé au niveau d'une région extérieure de l'au moins une joue d'accouplement (12) s'étendant dans la direction d'introduction de l'accouplement de remorque (20).

5. Dispositif d'accouplement selon l'une quelconque des revendications 1 à 4, **caractérisé en ce que** les joues d'accouplement (12, 14) s'étendent dans la direction verticale ou horizontale.

6. Dispositif d'accouplement selon l'une quelconque des revendications 1 à 5, **caractérisé en ce que** le support d'accouplement (22) peut être amené à l'intérieur des rainures de guidage (16, 18) le long d'une plage de réglage prédéfinie dans différentes positions fonctionnelles.

7. Dispositif d'accouplement selon l'une quelconque des revendications 1 à 6, **caractérisé en ce que** l'élément de codage (38) est dimensionné en tenant compte d'un jeu existant entre le support d'accouplement (22) et les rainures de guidage (16, 18), de telle sorte qu'un contact avec le contour de codage (36) dans l'état introduit soit exclus.

8. Dispositif d'accouplement selon l'une quelconque des revendications 1 à 7, **caractérisé en ce que** l'élément de codage (38) est une saillie (40, 48, 56) faisant saillie latéralement au niveau du support d'accouplement (22).

9. Dispositif d'accouplement selon la revendication 8, **caractérisé en ce que** la saillie est réalisée sous la forme d'un boulon fixe (40), d'un renflement (48) ou d'une branche (56) venant en prise autour de l'au moins une joue d'accouplement (12) dans la région d'un flanc extérieur (54).

10. Dispositif d'accouplement selon la revendication 9, **caractérisé en ce que** le boulon (40) est ajusté dans un trou borgne réalisé dans le support d'accouplement (22).

11. Dispositif d'accouplement selon la revendication 9 ou 10, **caractérisé en ce que** le boulon (40) est fabriqué en acier trempé et/ou pourvu d'un traitement d'amélioration de sa surface.

12. Dispositif d'accouplement selon la revendication 9, **caractérisé en ce que** le renflement (48) est un constituant d'une seule pièce du support d'accouplement (22).

13. Dispositif d'accouplement selon la revendication 9, **caractérisé en ce que** la branche (56) est soudée au niveau d'un côté extérieur (58) du support d'accouplement (22).

14. Véhicule tracteur agricole, en particulier tracteur agricole, comprenant un dispositif d'accouplement (10) selon l'une quelconque des revendications 1 à 7.
